Europäisches Patentamt

(19) European Patent Office

Office européen des brevets

(11) Numéro de publication: **0 112 198**
**B1**

(12) **FASCICULE DE BREVET EUROPÉEN**

(45) Date de publication du fascicule du brevet:
**03.09.86**

(21) Numéro de dépôt: **83402152.9**

(22) Date de dépôt: **07.11.83**

(51) Int. Cl.⁴: **F 02 K 1/15**

(54) **Dispositif de commande et de régulation de la section d'ouverture d'une tuyère propulsive.**

(30) Priorité: **29.11.82 FR 8219949**

(43) Date de publication de la demande:
**27.06.84 Bulletin 84/26**

(45) Mention de la délivrance du brevet:
**03.09.86 Bulletin 86/36**

(84) Etats contractants désignés:
**DE FR GB IT SE**

(56) Documents cité:
**FR-A-1 395 470**
**FR-A-1 514 925**
**FR-A-2 406 079**
**US-A-2 726 507**
**US-A-2 818 703**
**US-A-2 834 182**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Canivet, Guy Maurice Charles, 2, rue des Alouettes Boissise- Le- Roi, F-77310 Saint Fargeau Ponthierry (FR)**

(74) Mandataire: **Moinat, François, S.N.E.C.M.A. Service des Brevets Boîte Postale 81, F-91003 Evry Cedex (FR)**

LIBER, STOCKHOLM 1986

EP 0 112 198 B1

## Description

La présente invention concerne un dispositif de commande et de régulation de la section d'ouverture d'une tuyère propulsive.

On connaît déjà par exemple des turboréacteurs d'aviation équipés d'un régulateur principal qui dans les conditions normales, règle le débit de carburant envoyé aux chambres de combustion, et d'un régulateur auxiliaire ou régulateur de secours que le pilote peut substituer au régulateur principal en cas de panne de celui-ci, pour permettre une continuation du vol jusqu'au terrain le plus proche.

Une combinaison de ce genre a déjà été décrite dans la demande de brevet française 77.30486 (numéro de publication 2 406 079) déposée par la Demanderesse le 11 octobre 1977.

Par ailleurs, FR-A 1 514 925 décrit un dispositif de commande d'une tuyère réglable dans lequel en cas de défaillance d'un dispositif primaire, celui-ci est verrouillé dans une position déterminée et une intervention du pilote commande un dispositif secondaire de secours.

US A-2 834 182 décrit un système de commande de tuyère comportant un circuit de secours en cas de panne du circuit électrique principal. Ce circuit de secours, enclenché par le pilote, commande un distributeur d'alimentation du vérin de commande.

L'invention apporte une solution au problème que peut poser l'obtention automatique d'une poussée de propulsion suffisante quand on passe au vol avec régulateur de secours en service, en évitant toute intervention manuelle directe du pilote au niveau du dispositif de commande de tuyère.

Cette solution, comportant l'emploi d'une tuyère équipée d'un réglage de section commandé par au moins un vérin hydraulique et permettant de faire varier la poussée par variation de cette section, se caractérise en ce que les organes de commutation de la marche normale en marche secours comportent un tiroir ou organe équivalent qui coopère avec un conduit relié à au moins un orifice que comporte le vérin, ou l'un d'eux quand il y en a plusieurs, en plus de ses tuyauteries d'alimentation fournissant les pressions d'ouverture et de fermeture de la tuyère, de manière que selon la position du piston de vérin, l'orifice est tantôt obturé, tantôt découvert, établissant la communication avec l'une ou l'autre des chambres du vérin pendant que le tiroir obture ledit conduit pendant la marche normale et le met au contraire à l'échappement vers le retour de la pompe du système d'alimentation lors de la marche en secours, de telle sorte que la pression différentielle engendrée dans le vérin hydraulique commande la tuyère en secours, la section de la tuyère prenant une valeur intermédiaire qui assure automatiquement au moteur une poussée suffisante tout en évitant le risque de pompage de compresseur. Une autre caractéristique de l'invention consiste en ce que le tiroir peut recevoir, par une manoeuvre du pilote au début de la commutation susdite, une commande momentanée le maintenant dans sa position de marche normale, de sorte que le vérin se met ou reste alors dans la position correspondant à la pleine ouverture de la tuyère afin de faciliter un rallumage des chambres de combustion si c'est nécessaire.

Le fluide hydraulique utilisé pour la commande des vérins est, de préférence, le carburant lui-même, sous la pression fournie par la pompe du régulateur principal pendant la marche normale ou sous la pression fournie par la pompe du régulateur de secours, lors de la marche en secours.

La description qui va suivre en regard des dessins annexés donnés à titre d'exemples non limitatifs, fera bien comprendre comment l'invention peut être réalisée, les particularités qui ressortent tant du texte que des dessins faisant, bien entendu, partie de ladite invention.

Les figures 1 et 1a représentent respectivement, d'une part, un régulateur tel que décrit dans le document FR-A-2406079 rappelé ci-dessus et le dispositif de régulation de la section de tuyère combiné avec ce régulateur, selon un mode de réalisation de l'invention; les tuyauteries représentées sur ces figures se raccordent aux points qui sont marqués a, b, c, d et e.

De plus, sur les figures, les organes sont représentés dans la position qu'ils occupent quand le régulateur principal est en service.

La figure 2 est une vue semblable à la figure 1a, les organes étant dans la position qu'ils occupent quand le régulateur de secours est en service, les chambres de combustion du turboréacteur étant allumées.

Les figures 3 et 4 sont des vues de détail du piston du vérin-pilote et des orifices de régulation qu'il contrôle.

La figure 5 montre une variante du dispositif représenté sur les figures 1a et 2.

Les figures 6 et 7 représentent deux autres variantes.

La figure 8 montre schématiquement le dispositif de la figure 7 dans une autre position de fonctionnement.

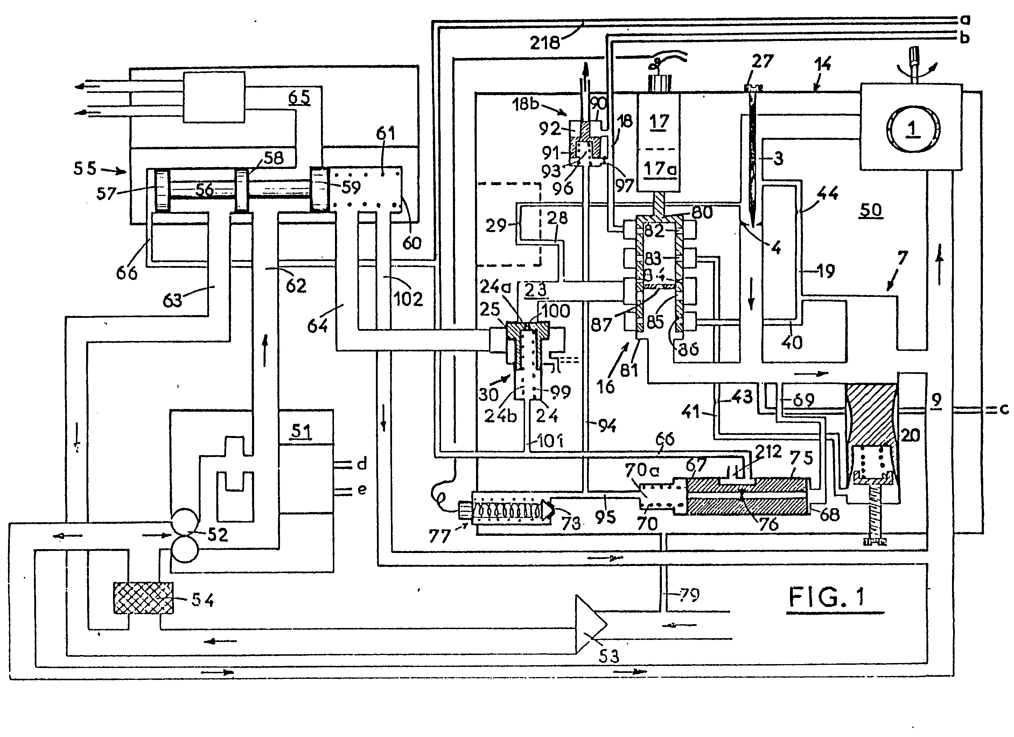

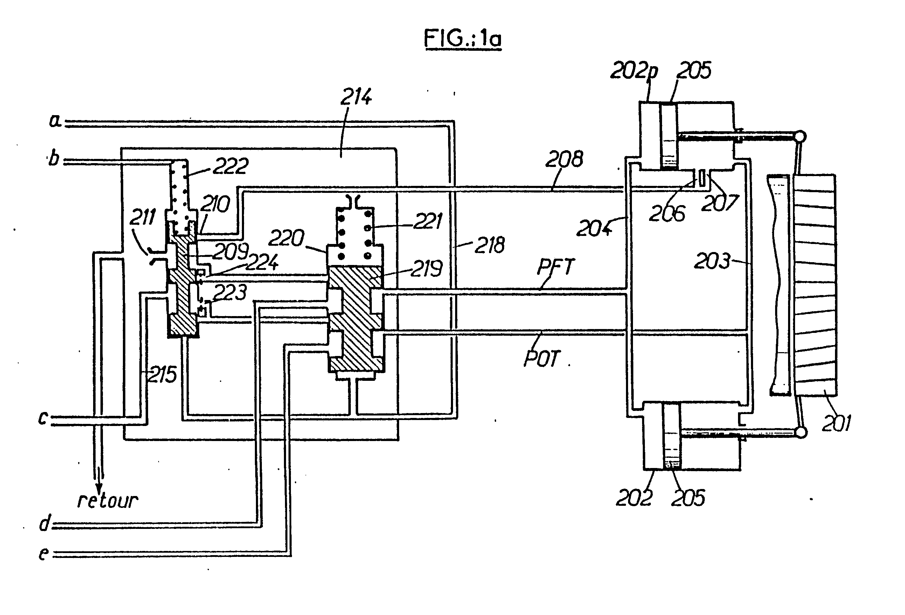

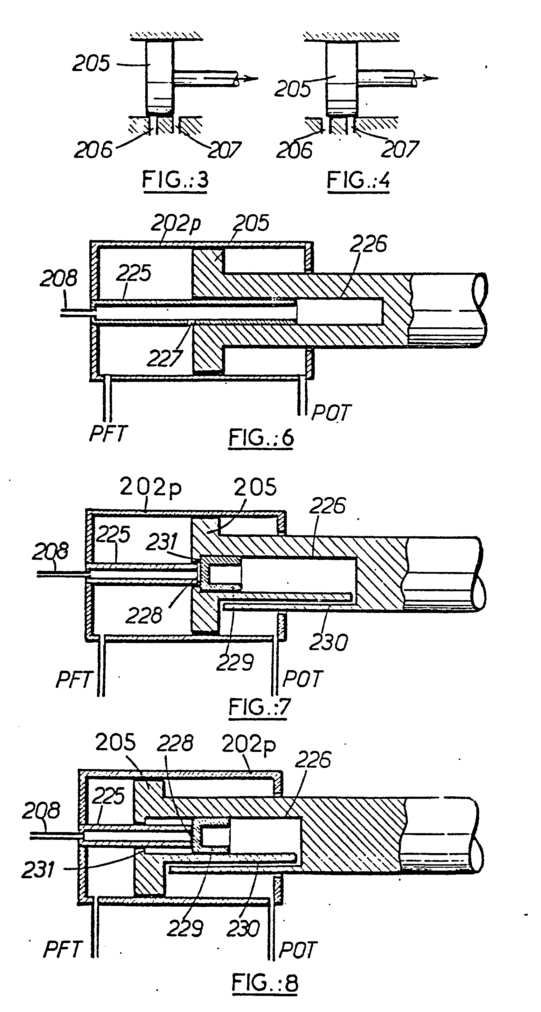

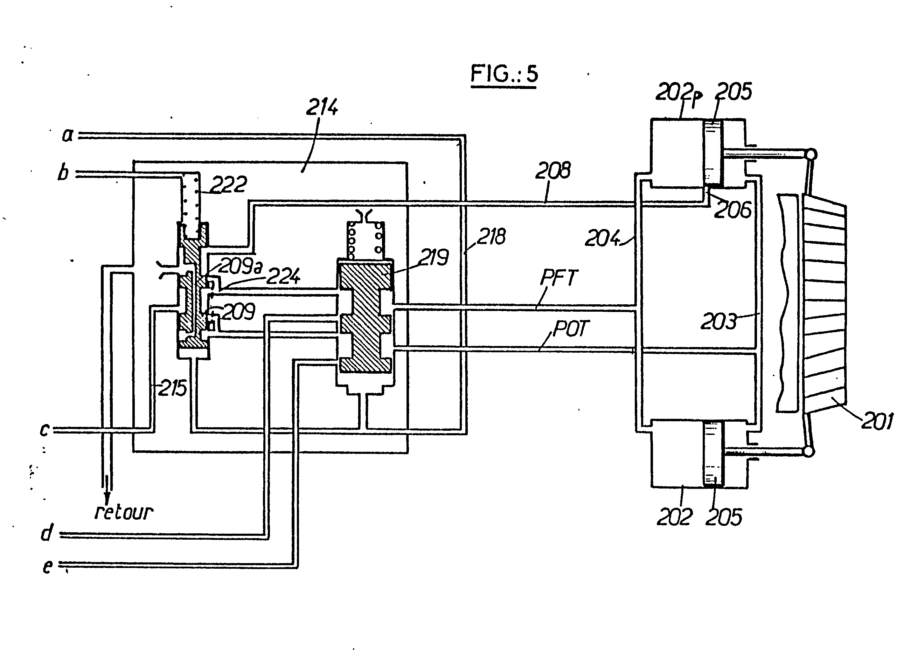

Sur la figure 1, on a reproduit, avec quelques modifications qui résulteront de la description ci-après, la figure 7 du brevet français de la Demanderesse 77.30486 (numéro de publication 2 406 079), en conservant les numéros de référence déjà utilisés dans ledit brevet, ce qui facilitera l'identification des organes.

Les trois branchements marqués a, b, c, qui ont été ajoutés à la figure 7 du brevet susdit, se raccordent à ceux marqués des mêmes références sur la figure 1a ou, l'on a représenté un dispositif de contrôle de la section de sortie de la tuyère, selon une forme de réalisation de l'objet de l'invention.

On ne décrira pas en détail les organes du régulateur de secours représenté figure 1 et l'on pourra se référer à la description qui en a été donnée dans le brevet susdit.

Brièvement, on voit en 51 le régulateur principal avec sa pompe 52, en 65 le conduit de départ du carburant vers les injecteurs des chambres de combustion, en 14 le régulateur de secours avec sa pompe 1, en 16 le robinet avec boisseau tournant 80 dont le pilote commande la rotation par le moteur électrique 17 quand le pilote veut piloter le débit en secours, en 55 le transiteur avec tiroir mobile 56, lequel, selon la position qu'il occupe, achemine le carburant refoulé par la pompe du régulateur principal 51 vers les injecteurs des chambres de combustion, en mettant alors au retour par 102 le conduit 64 destiné à l'amenée du carburant fourni par la pompe de secours 1, ou réciproquement (sur le dessin le tiroir 56 est représenté dans la position où le régulateur principal 51 avec sa pompe 52 est en service). On voit encore en 7 une soupape qui peut soit mettre au retour le refoulement de la pompe de secours 1 en amont du boisseau 80 (c'est la position du tiroir de la soupape 7 qui est représentée sur la figure 1), soit isoler le refoulement du retour pour que la haute pression fournie par la pompe de secours devienne active. On voit aussi en 67 un tiroir mobile actionné par la pression prise par la tuyauterie 69 sur le refoulement de la pompe 1 et, en opposition, par le ressort 70 et par la pression prise dans la tuyauterie 95 en aval du robinet électromagnétique 77. Ce robinet est normalement fermé. Il est ouvert par le pilote quand celui-ci veut mettre en service le régulateur de secours.

Le dispositif de régulation de la section de la tuyère raccordé selon a, b, c va maintenant être décrit en regard de la figure 1a. Sur cette figure, les organes sont également dans la position où la régulation est effectuée par le régulateur principal.

Sur la figure 1a, on a représenté schématiquement en 201 l'ensemble des volets mobiles servant à régler la section utile de la tuyère d'un turboréacteur. La constitution d'un tel dispositif, susceptible d'ailleurs de nombreuses variantes, est en elle-même bien connue et n'a pas besoin d'être décrite en détail.

Le mouvement de ces volets pour augmenter ou réduire la section utile de la tuyère est commandé par un ensemble de vérins hydrauliques répartis autour de l'axe de la tuyère et actionnant chacun un volet ou un groupe de volets. Ces divers vérins alimentés en parallèle sont de constitution habituelle, comme représenté pour le vérin 202, avec une tubulure 203 pour l'admission de la pression d'ouverture de la tuyère désignée ci-après par POT et une tubulure 204 pour l'admission de la pression de fermeture de la tuyère désignée par PFT, De la sorte, un déplacement du piston 205 des vérins, de la droite vers la gauche de la figure 1a, correspond à l'ouverture de la tuyère, tandis qu'un déplacement de la gauche vers la droite correspond à la fermeture.

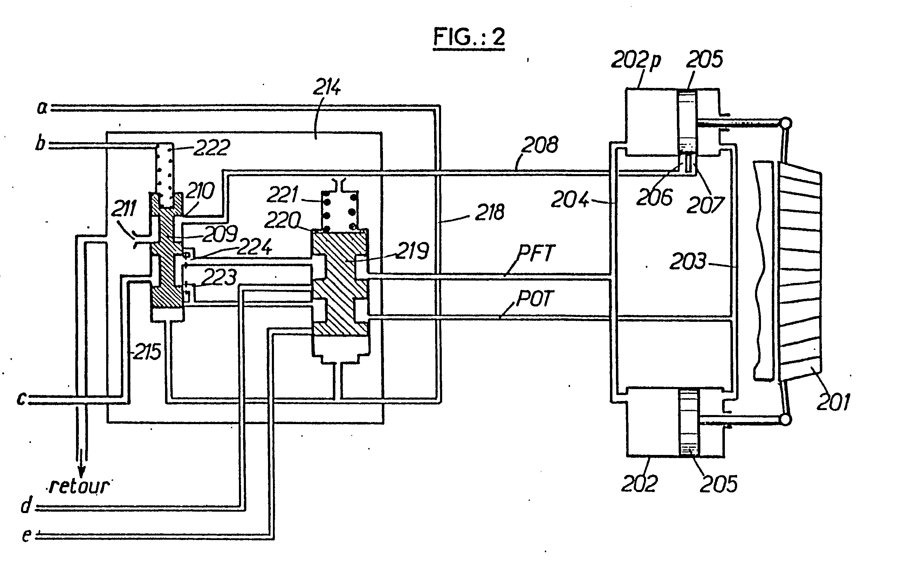

L'un des vérins 202p, jouant le rôle de vérin-pilote, est représenté à la partie supérieure de la figure 1a. Il est également raccordé comme les autres aux tubulures 203 et 204, mais comporte en outre dans une zone intermédiaire de sa paroi, convenablement choisie, deux perçages 206-207, par exemple échelonnés sur une génératrice, à un intervalle adapté à l'épaisseur du piston, de manière que dans une certaine position de celui-ci il obture simultanément ces deux perçages. Ceux-ci sont reliés l'un et l'autre à une tubulure 208 qui, par le fonctionnement d'un tiroir 209, peut être soit obturée en 210 (figure 1a) donc mise hors d'action, soit reliée par 211 (figure 2) avec le retour des pompes.

Entre le régulateur principal 51 et le régulateur de secours 14 est disposée une sorte de commutation 214 qui a pour fonction de substituer aux pressions fournies par le régulateur principal 51, pour la commande des vérins de tuyère 202 (pressions POT et PFT), celles fournies par le régulateur de secours 14 quand celui-ci est mis en action, et réciproquement.

Dans la position des organes représentés sur les figures 1 et 1a, le régulateur de secours n'étant pas en action et seul étant en action le régulateur principal 51, le robinet électromagnétique 77 est fermé, de sorte que la chambre 70a est mise à la même pression que la chambre 68 par l'intermédiaire de l'orifice 76. Sous l'action du ressort 70, le tiroir 67 occupe la position (représentée figure 1) pour laquelle il met au retour en 212 la tubulure 66 reliée en a à la tubulure 218. De la sorte, dans le dispositif de commutation 214, le tiroir 219 du transiteur 220 est placé, par son ressort 221, dans la position figurée pour laquelle les tubulures 203 et 204 des vérins sont alimentées par le régulateur principal 51 dont les sorties de pression sont raccordées aux points d et e. De plus, le tiroir 209 est mis par son ressort 222 dans la position figurée où il obture la tubulure 208 aboutissant aux perçages 206 et 207 du vérin-pilote 202p. Ces perçages restent donc hors d'action et la régulation de la tuyère s'effectue selon les lois qui sont propres au régulateur principal.

En particulier, la tuyère peut être et rester ouverte en grand, ce qui correspond à la position des pistons 205 représentée sur la figure 1a.

Si maintenant en cas de panne du régulateur principal 51, on met en service le régulateur de secours 14 en agissant sur le robinet électromagnétique 77, le boisseau 80 étant placé de façon qu'il n'alimente pas la conduite 18 par les lumières 82 (figure 1) comme décrit dans le brevet susdit, il en résulte deux choses:

- tout d'abord la pression dans la chambre 70a est mise au retour pompe par l'intermédiaire du robinet électromagnétique 77, la pression de la tubulure 69 étant maintenue à la haute pression pousse le tiroir 67 dans la position opposée à celle que représente la figure 1 et les tubulures 66 et 218 sont isolées du retour 212.

- par le clapet surpresseur 30 qui reçoit le carburant refoulé par la pompe de secours, la haute pression de cette pompe est admise dans les tubulures 66 et 218, ce qui détermine, d'une part, le déplacement du transiteur 55 vers la droite et l'envoi du carburant de secours vers les chambres de combustion et, d'autre part, le déplacement des tiroirs 209 et 219 dans la position que représente la figure 2.

Comme on le voit, le tiroir 219 coupe alors la communication des tuyauteries 203 et 204 avec le régulateur principal et permet au contraire au carburant refoulé en c par la pompe de secours de passer vers ces tuyauteries à travers les orifices 223 et 224 démasqués par le tiroir 209.

En même temps, celui-ci a mis au retour par 211 la tubulure 208 communiquant avec les perçages latéraux 206 et 207 du vérin-pilote 202p.

En supposant que dans cette période où l'on vient de quitter le fonctionnement normal, la tuyère soit pleinement ouverte, ce qui correspond à la position des pistons 205 des vérins représentés sur la figure 1a, le carburant arrivant par la tuyauterie 203 et celui remplissant les chambres de droite des vérins peut fuir par la tuyauterie 208 vers le retour 211. Autrement dit, l'action de la pression PFT devient prépondérante par rapport à la pression POT et les vérins diminuent la section de la tuyère en permettant une augmentation de la poussée. Le mouvement de fermeture se poursuit jusqu'à ce que le piston du vérin-pilote vienne au droit des perçages 206 et 207 en les obturant. La disposition des deux perçages successifs a l'avantage d'assurer une position précise du vérin quel que soit le sens des efforts sur la tige.

Le fonctionnement qui précède suppose qu'il n'y a pas eu extinction des chambres de combustion avant de passer au régime de secours.

Si cette extinction a eu lieu, il faut rallumer les chambres de combustion.

Pour cela, on place le boisseau 80 dans une position telle qu'il alimente la conduite 18 par les lumières 82 et on ouvre le robinet 77 à commande électromagnétique pour produire l'ouverture du clapet 92 envoyant du carburant aux injecteurs d'allumage des chambres de combustion. En même temps, le carburant envoyé en b maintient la pression au-dessus du tiroir 209, de sorte que les pressions au-dessus et au-dessous de ce tiroir étant à peu près égales le ressort 222 maintient le tiroir 209 dans la position de la figure 1a, tandis que le tiroir 219 a pris la position de la figure 2.

Dans cette configuration des tiroirs, les vérins 202 sont alimentés de la manière suivante:
- la pression PFT est mise au retour en 211 par le tiroir 209.
- la pression POT est égale à la haute pression de la pompe de secours transmise en c.

La tuyère est alors complètement ouverte pour le rallumage.

Quand le rallumage a été effectué, le pilote fait tourner le boisseau 80 qui quitte la position de rallumage. Entre temps, l'ouverture du clapet 91 pour l'envoi du carburant aux injecteurs d'allumage a fait chuter la pression dans la tuyauterie 18 et par conséquent par b sur la face supérieure du tiroir 209. Ce tiroir qui reste soumis sur sa face inférieure à la pression du fluide qui lui est envoyé par le clapet 30 et par a est déplacé à l'encontre du ressort 222 pour prendre la position représentée sur la figure 2 et l'on revient au mode de réglage précédemment décrit.

On voit sur la figure 2 que les orifices de passage 223, 224 du carburant secours, contrôlés par le tiroir 209, sont munis de diaphragmes. Ces diaphragmes sont utiles pour régler la vitesse de déplacement des volets de la tuyère durant les mouvements transitoires et leur section est ajustée à cet effet.

Ainsi, dans le réglage précédemment décrit, quand la tuyère se déplace vers sa position de fermeture et que le piston du vérin-pilote 202p commence à obturer les orifices 206 et 207 le vérin-pilote réalise avec le diaphragme 223 une sorte de potentiomètre hydraulique. De la sorte, au fur et à mesure du mouvement des volets de tuyère vers la fermeture, la pression POT augmente rapidement jusqu'à l'obtention de l'équilibre des vérins. La position de stabilisation dépend des efforts à fournir par les vérins, lesquels varient avec les conditions de fonctionnement du turboréacteur.

A un certain moment, les orifices 206 et 207 sont complètement obturés, leur intervalle étant à cet effet convenablement adapté à l'épaisseur du piston. Les pressions POT et PFT sont alors l'une et l'autre égales à la pression fournie par la pompe de secours en c.

L'effort sur chaque vérin se réduit à l'effet de la différence des surfaces actives des faces opposées des pistons, en raison de la section de leur tige. Cet effort peut être encore trop élevé dans certains conditions et conduire la tuyère à continuer son mouvement vers la fermeture, cela jusqu'au moment où les orifices 206 se trouvent découverts. Le débit de fuite provoqué ainsi à travers le passage à diaphragme 224 y engendre une perte de charge qui fait chuter la pression PFT en conduisant à la stabilisation de la tuyère. Suivant les conditions de fonctionnement du réacteur, le dispositif décrit conduit donc à une régulation de la tuyère dans une position qui n'est pas rigoureusement définie et qui peut varier entre les deux extrêmes schématisés par les figures 3 et 4.

Ceci suppose naturellement que la pression fournie en c par la pompe de secours soit suffisante pour que le cas de la figure 3 soit permis, ce qui sera généralement réalisé dans la plus grande partie du domaine de vol secours. Dans le cas contraire, la tuyère s'ouvrirait partiellement jusqu'à ce que l'effort à fournir, qui diminue quand la section de la tuyère augmente, corresponde au niveau de pression disponible en c.

Dans la variante de réalisation que représente la figure 5, la paroi du vérin-pilote 202p ne comporte qu'un perçage 206.

Le transiteur 219 est inchangé de même que le circuit des tuyauteries.

Le tiroir 209 est modifié par l'aménagement d'un canal axial 209a qui, dans sa position de marche en secours représentée sur la figure 5, met au retour la pression POT.

Le fonctionnement en marche normale, c'est-à-dire avec le régulateur principal, reste inchangé par rapport à celui qui a été décrit ci-dessus, en regard des figures 1 et 1a.

Dans le fonctionnement secours, le tiroir 219 du transiteur et le tiroir 209 étant dans la position représentée figure 5, la pression PFT est reliée par c à la pression de refoulement de la pompe de secours, tandis que la pression POT est reliée au retour par le perçage axial 209a du tiroir 209. Les volets de la tuyère se déplacent donc vers la fermeture jusqu'au moment où le piston du vérin-pilote passe à la droite du perçage 206 comme représenté sur la figure 5. A ce moment, la pression PFT fuit vers le retour et le débit de fuite, à travers le passage à diaphragme 224, engendre une perte de charge qui fait diminuer la pression PFT jusqu'à la stabilisation du piston du vérin-pilote et, par conséquent, des volets de la tuyère. Quand l'orifice 206 est complètement découvert, la pression PFT devient pratiquement égale à la pression au retour de la pompe de secours et l'effort sur chaque vérin se réduit à l'effet de la section différentielle due à la tige du piston, sous l'effet de la pression de retour qui règne de chaque côté du piston,

Dans le mode de réalisation représenté sur la figure 6, le cylindre du vérin-pilote 202p ne présente pas de perçage sur sa paroi. Dans l'axe du cylindre, est disposé un tube 225, fixé sur le fond du cylindre, et pénétrant dans un alésage axial 226 du piston et de sa tige, la surface externe du tube 225 et la surface de l'alésage 226 étant adaptées l'une à l'autre, par exemple par rodage, de manière à réduire au minimum les fuites de fluide entre le tube et l'alésage tout en permettant un mouvement du piston par-rapport au tube sans frottement excessif. En un point convenable de sa paroi, le tube 225 est percé d'un orifice 227 qui peut être obturé ou découvert par le piston 205 dans le mouvement de ce piston.

Comme on le comprend, si on relie les orifices d'extrémité du cylindre aux pressions POT, PFT, selon un schéma semblable à celui de la figure 5, et l'intérieur du tube 225 à la conduite 208 à travers le fond du cylindre, le dispositif fonctionnera de façon tout à fait semblable à ce qui a été décrit en regard de la figure 5.

Si l'on veut éviter l'inconvénient qui peut résulter de la nécessité d'effectuer un bon centrage entre le tube 225 et le corps du vérin-pilote, on peut modifier le dispositif comme représenté sur la figure 7.

Dans cette variante, le tube 225 n'est pas percé latéralement mais son extrémité librement ouverte 228 coopère avec un petit piston 229, disposé dans un alésage 226 de la tige du piston du vérin-pilote, alésage qui est en communication par un canal 230 avec la chambre située à la droite du piston qui reçoit la pression POT, laquelle règne ainsi dans l'alésage 226 à la droite du petit piston auxiliaire 229.

Le fonctionnement de cette variante se comprend aisément.

Quand le piston du vérin-pilote se trouve vers la gauche de la figure 7, c'est-à-dire en position "tuyère ouverte", l'extrémité libre du tube 225 s'appuie contre le piston auxiliaire 229. L'extrémité 228 du tube 225 et la face coopérante du piston auxiliaire 229 étant dressées bien planes, le tube 225 et le piston 229 constituent ensemble un clapet qui est fermé.

Le piston 229 peut jouer à l'intérieur de l'alésage 226 pour permettre la continuation du mouvement du piston 205 vers la gauche après que l'extrémité 228 du tube 225 soit venue en application sur le piston 229. Quand le piston 205 se déplace vers la droite pour la fermeture de la tuyère, le clapet formé par l'extrémité 228 du tube 225 et le piston 229 reste fermé au début de ce mouvement, comme le montre le schéma de la figure 8. Le piston 229 reste fixe jusqu'à ce que ledit piston vienne en butée contre l'épaulement interne 231 du piston principal 205, moment à partir duquel l'extrémité 228 du tube 225 se trouve découverte en permettant la chute de la pression dans la chambre de gauche du vérin, comme représenté dans la figure 7.

## Revendications

1. Dispositif de commande et de régulation de la section d'ouverture d'une tuyère propulsive comprenant au moins un vérin hydraulique agissant sur au moins un organe mobile dont le déplacement modifie la section de la tuyère, un premier système d'alimentation du vérin en fluide hydraulique sous pression pour la marche normale et un deuxième système d'alimentation utilisable en secours, caractérisé en ce que les organes de commutation de la marche normale en marche secours comportent un tiroir (209) ou organe équivalent qui coopère avec un conduit (208) relié à au moins un orifice (206, 207) que comporte le vérin, ou l'un quand il y en a plusieurs, en plus de ses tuyauteries d'alimentation fournissant les pressions d'ouverture (POT) et de fermeture (PFT) de la tuyère, de manière que selon la position du piston (205) de vérin, l'orifice (206, 207) est tantôt obturé, tantôt découvert, établissant la communication avec l'une ou l'autre des chambres du vérin pendant que le tiroir (209) obture ledit conduit (208) pendant la marche normale et le met au contraire à l'échappement vers le retour de la pompe du système d'alimentation lors de la marche en secours, de telle sorte que la pression différentielle engendrée dans le vérin hydraulique commande la tuyère en secours, la section de la tuyère prenant une valeur intermédiaire qui assure automatiquement au moteur une poussée suffisante tout en évitant le risque de pompage du compresseur.

2. Dispositif selon la revendication 1 caractérisé en ce que le fluide hydraulique sous pression alimentant le ou les vérins est du carburant prélevé sur le refoulement des pompes alimentant les chambres de combustion du réacteur.

3. Dispositif selon l'une des revendications 1 ou 2, caractérisé en ce que la manette ou organe équivalent mis à la disposition du pilote pour passer de la marche normale à la marche secours comporte une position correspondant au rallumage des chambres de combustion et pour laquelle une pression hydraulique maintient temporairement ledit tiroir (209) dans sa position de marche normale, de sorte que le rallumage peut se faire, tuyère ouverte.

4. Dispositif selon l'une quelconque des revendications 1 à 3, caractérisé en ce que le cylindre du vérin (202p) comporte sur sa paroi deux perçages (206, 207) à un intervalle correspondant à l'épaisseur du piston, de sorte que le piston peut tout juste masquer simultanément ces orifices.

5. Dispositif selon l'une quelconque des revendications. 1 à 3, caractérisé en ce que l'orifice de décharge de la pression d'ouverture (227, figure 6) contrôlé par le piston est prévu sur un tube (225) fixé sur un fond du cylindre du vérin (202p) et pénétrant dans un alésage (226) du piston (205).

6. Dispositif selon l'une quelconque des revendications 1 à 3, caractérisé en ce que l'orifice de décharge est prévu à l'extrémité ouverte (228) d'un tube (225) fixé sur un fond du cylindre du vérin et coopérant avec un petit piston auxiliaire (229) monté coulissant dans un alésage (226) (figures 7 et 8) du piston principal du vérin.

**Patentansprüche**

1. Vorrichtung zur Steuerung und Regelung des Öffnungsquerschnitts einer Schubdüse
   mit wenigstens einer hydraulischen Zylinderanordnung, die auf wenigstens ein bewegliches Organ einwirkt, durch dessen Verschiebung der Querschnitt der Schubdüse veränderbar ist,
   mit einem ersten System zur Speisung der Zylinderanordnung mit unter Druck stehender Hydraulikflüssigkeit für den Normalbetrieb und einem zweiten Speisesystem, das für den Notbetrieb dient,
   dadurch gekennzeichnet,
   daß die Organe zur Umschaltung von Normalbetrieb auf Notbetrieb einen Schieber (209) oder ein gleichwirkendes Organ umfassen, das mit einer Leitung (208) zusammenwirkt, die mit wenigstens einer in der Zylinderanordnung oder, falls mehrere Zylinderanordnungen vorhanden sind, in einer der Zylinderanordnungen ausgebildeten Öffnung (206, 207) verbunden ist und die diese Zylinderanordnung zusätzlich zu ihren Speiseleitungen besitzt, die den Öffnungsdruck (POT) und den Schließdruck (PFT) für die Schubdüse liefern, wobei diese Öffnung (206, 207) derart angeordnet ist, daß sie je nach Position des Kolbens (205) der Zylinderanordnung fallweise verschlossen oder geöffnet ist und dabei die Verbindung mit der einen oder der anderen Kammer der Zylinderanordnung herstellt, während der Schieber (209) die genannte Leitung (208) bei Normalbetrieb verschließt, sie hingegen bei Notbetrieb an den Auslaß zum Rücklauf der Pumpe des Speisesystems legt, so daß der in der hydraulischen Zylinderanordnung erzeugte Differenzdruck die Schubdüse in den Notbetrieb steuert, wobei der Querschnitt der Schubdüse einen Mittelwert annimmt, der dem Motor automatisch eine ausreichende Schubkraft sichert, dabei jedoch die Gefahr ausschaltet, daß der Verdichter um die Nenndrehzahl pendelt ("pumpt").

2. Vorrichtung nach Anspruch 1, dadurch gekennzeichnet, daß die die Zylinderanordnung oder die Zylinderanordnungen speisende unter Druck stehende Hydraulikflüssigkeit Kraftstoff ist, der der Fördermenge der Pumpen zur Speisung der Brennkammern des Triebwerks entnommen wird.

3. Vorrichtung nach einem der Ansprüche 1 oder 2, dadurch gekennzeichnet, daß die Bedienungshandhabe oder das entsprechende Organ, das dem Piloten für die Umschaltung von Normalbetrieb auf Notbetrieb zur Verfügung steht, eine Position besitzt, die dem Wiederzünden der Brennkammern entspricht und in der ein hydraulischer Druck den genannten Schieber (209) vorübergehend in seiner dem Normalbetrieb zugeordneten Position hält, so daß das Wiederzünden bei geöffneter Schubdüse stattfinden kann.

4. Vorrichtung nach einem der Ansprüche 1 bis 3, dadurch gekennzeichnet, daß in der Wandung des Zylinders (202p) der Zylinderanordnung zwei Öffnungen (206, 207) in einem Abstand vorgesehen sind, der der Dicke des Kolbens entspricht, so daß der Kolben diese Öffnungen gleichzeitig abdecken kann.

5. Vorrichtung nach einem der Ansprüche 1 bis 3, dadurch gekennzeichnet, daß die von dem Kolben steuerbare Auslaßöffnung (227, Fig. 6) für den Öffnungsdruck an einem Rohr (225) ausgebildet ist, das auf dem Boden des Zylinders (202p) der Zylinderanordnung befestigt ist und in eine Bohrung (226) des Kolbens (205) eindringt.

6. Vorrichtung nach einem der Ansprüche 1 bis 3, dadurch gekennzeichnet, daß die Auslaßöffnung an der offenen Stirnseite (228) eines Rohrs (225) ausgebildet ist, das an dem Boden des Kolbens befestigt ist und mit einem kleinen Hilfskolben (229) zusammenwirkt, der gleitbar in einer Bohrung (226, Fig. 7 und 8) des Hauptkolbens der Zylinderanordnung montiert ist.

## Claims

1. Device for controlling and adjusting the opening section of a propulsion nozzle comprising at least one hydraulic actuator acting upon at least one movable member of which the displacement modifies the section of the nozzle, a first system for the supply of pressurized hydraulic fluid to the actuator for normal operation and a second system for supply which can be used in emergency, characterized in that the members for changing over from normal operation to emergency operation comprise a slide-valve (209) or equivalent member which cooperates with a passage (208) connected at least to one orifice (206, 207) which includes the actuator, or one of them when there are several, others of its supply openings providing pressures for the opening (POT) and the closure (PFT) of the nozzle, in such a manner that in accordance with the position of the piston (205) of the actuator, the orifice (206, 207) is at one time blocked, at another time uncovered, establishing the communication with the one or the other of the chambers of the actuator whilst the slide valve (209) blocks off the said passage (208) during the normal operation and places it in a different configuration for return to the inlet of the pump of the supply system during emergency operation, such that the differential pressure set up in the hydraulic actuator controls the nozzle in emergency, the section of the nozzle assuming an intermediate value which automatically ensures for the engine a thrust sufficient to avoid the risk of surging in the compressor.

2. Device according to claim 1 characterized in this that the hydraulic fluid under pressure supplying the actuator or actuators is fuel bled from the returns of the pumps supplying the combustion chambers of the engine.

3. Device according to one of claims 1 or 2, characterized in this that the hand control lever or equivalent member is placed at the disposal of the pilot in order to change from the normal operation to the emergency operation comprises a position corresponding to re-ignition of the combustion chambers and for which a hydraulic pressure temporarily maintains the said slide valve (209) in its normal operational position, so that the re-ignition can take place with the nozzle open.

4. Device according to anyone of claims 1 to 3, characterized in this that the cylinder of the actuator (202p) comprises on its wall two openings (206, 207) and the spacing corresponding to the thickness of the piston, such that the piston just masks simultaneously these orifices.

5. Device according to one of claims 1 to 3, characterized in this that the discharge orifice of the pressure for opening (227, Figure 6) controlled by the piston is provided on a tube (225) secured on a base of the cylinder of the actuator (202p) and extending into a bore (226) of the piston (205).

6. Device according to any one of claims 1 to 3, characterized in this that the discharge orifice is provided at the open end (228) of a tube (225) secured to a base of the cylinder of the actuator and cooperating with a small auxiliary piston (229) slidably mounted in a bore (226) (Figures 7 and 8) of the main piston of the actuator.

FIG. 1

FIG.:1a

FIG.: 2

0 112 198

FIG.:3   FIG.:4

FIG.:6

FIG.:7

FIG.:8

7

FIG.: 5